# EUROPEAN PATENT SPECIFICATION

(11) **EP 1 761 418 B1**
(45) Date of publication and mention of the grant of the patent: **07.01.2009**
(21) Application number: 05725619.0
(22) Date of filing: 11.03.2005
(51) Int. Cl.: B60R 22/44, B60R 22/46

(54) **SEAT BELT RETRACTOR WITH ELECTRIC MOTOR**
SITZGURTAUFROLLER MIT ELEKTROMOTOR
RÉTRACTEUR DE CEINTURE DE SÉCURITÉ AVEC MOTEUR ÉLECTRIQUE

(30) Priority: 24.06.2004 DE 202004009949 U
(43) Date of publication of application: 14.03.2007
(73) Proprietor: KEY SAFETY SYSTEMS, INC., Sterling Heights, MI 48314 (US)
(72) Inventor: SPECHT, Martin, 82340 Feldafing (DE); SEER, Mark, 81549 Munchen (DE); HECKMAYR, Thomas, 86871 Rammingen (DE); KILIAN, Thomas, 82291 Mammendorf (DE)
(74) Representative: Gislon, Gabriele
(86) International application number: PCT/US2005/008564
(87) International publication number: WO 2006/011923

(56) References cited:
- EP-A- 1 108 627
- WO-A-03/082640
- DE-A1- 19 961 799
- US-A- 4 618 108
- US-A1- 2001 032 902
- US-B1- 6 196 487

## Description

The invention relates to a seat belt retractor for of a vehicle having an electric motor for transmitting torque to the winding shaft of the retractor.

DE 100 13 869 C2 teaches a seat belt retractor wherein a torque is transmitted at a low revolution of a driving means to the motive spring to change the spring force. The known device has a coupling, which at a high revolution transmits the torque supplied by the driving means to the winding shaft to wind up the seat belt. The torque transmission can be carried out by a worm gear. The transmission means, with which the torque of the driving means is transmitted to the winding shaft, as well as the motive spring, are provided on one side of the retractor or the winding shaft.

DE 199 27 731 C2 teaches a seat belt retractor wherein a coupling is provided which, depending on a signal emitted in a pre-crash situation, transmits a torque supplied by the electric motor to the belt reel to pretighten the seat belt. A gear can also be provided between the output shaft of the electric motor and the winding shaft, whereby the gear and the motive spring, the spring force of which can also be adjusted by the electric motor driving means, are arranged on one side of the seat belt retractor or the winding shaft.

In the known seat belt retractors, the spring force of the motive spring and hence the comfort perceived by the wearer of the seat belt can be adjusted during normal driving conditions. In addition, during removal of the seat belt, the spring force can be increased for retracting the seat belt into a stored configuration. In addition, the torque transmitted at an increased revolution by the electric motor driving means to the belt reel can be used to pretighten the seat belt in a driving situation in which a high crash risk is detected.

US 2001/0032902 discloses a seat belt retractor according to the preamble of claim 1, comprising a shaft for winding up a seat belt, a spring to bias the winding shaft in the winding direction of the seat belt, an electric motor to transmit torque to the spring, so as to change the spring force, a clutch which can be activated to engage the motor with the winding shaft for winding up the belt, and a toothed gear to transmit the torque from the electric motor to the winding shaft or the spring.
The clutch is a mechanical clutch comprising a deformable spring member which, when deformed by inertial force (rotation), brings the clutch into an engaged state.

WO 03/082640 discloses a seat belt retractor provided with a locking means which engages a locking toothed gearing system on the side of the housing. The drive wheel of the tightening device can be connected to the belt shaft in a force-transmitting manner by the locking means for the belt shaft.

DE 19961799 discloses a seat belt retractor provided with an electric motor effecting a pretensioning device and a pyrotechnically driven tightening device.

The present invention according to claim 1 provides a seat belt retractor of the above mentioned type, in which a simple mounting of the gear of the coupling and the motive spring is achieved with a compact arrangement of the retractor. In an advantageous manner the electric motor driving means and the pyrotechnical tightening device are secured to a common seat belt retractor frame, which is to be secured to the vehicle structure, so that the reaction forces generated by the drive of the electric motor driving means and the pyrotechnical tightening device are supported or received via the seat belt retractor frame at the vehicle structure.

The invention will be described in more detail by an embodiment with reference to the sole drawing figure.

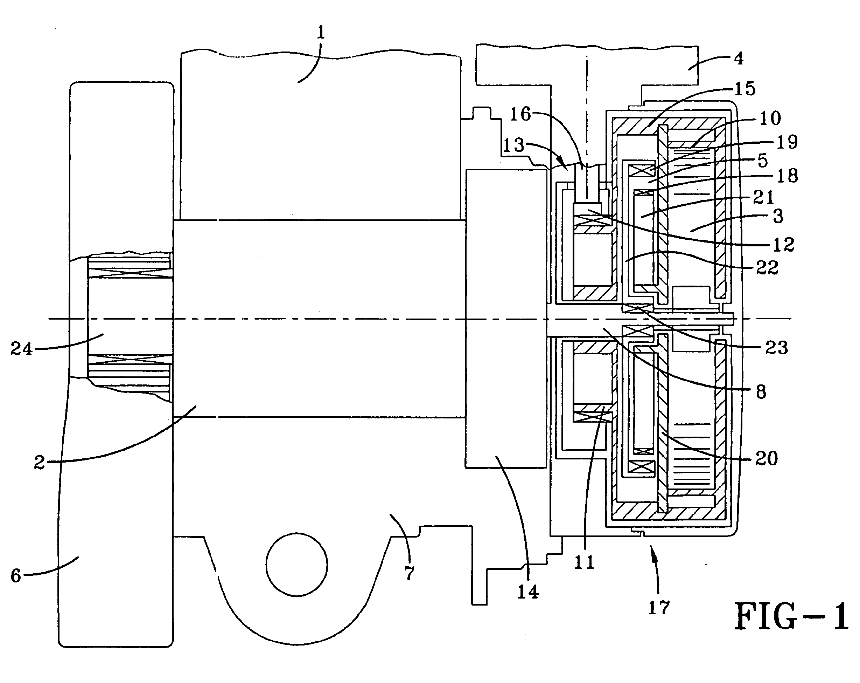

Figure 1 is a diagrammatic view of a preferred embodiment of the invention.

The embodiment of the invention shown in the figure is a seat belt retractor for a seat belt 1, which can be incorporated into a vehicle, in particular a motor vehicle. The seat belt retractor comprises a winding shaft 2 to wind up the seat belt 1 and a motive spring 3 to bias the winding shaft 2 in the winding direction of the seat belt 1. An electric motor 4, preferably a direct current motor, is a driving means used for changing the spring force of the motive spring 3 and for driving the winding shaft 1, in particular in a pre-crash situation.

To transmit the torque generated by the driving means 4 to the motive spring 3 and to the winding shaft 2, a gear 13, which will be described in more detail, and a coupling 5 are used. The first clutch engagement surface 18 of the coupling can be moved into engagement with the second clutch engagement surface 19 by an electromagnetic force, or by an inertial force.

The gear 13, the coupling 5 and the motive spring 3 are preferably a pre-assembled unit. The gear can comprise a toothed gear system. To this effect the toothed gear system can comprise a screw gear, for instance with a front screw wheel pair, or of a worm gear. The electric motor 4 can be subsequently secured to this unit or can be pre-assembled as a component of this unit. As can be seen from the figure, this unit is mounted to the so-called mechanical side of the seat belt retractor. The mechanical side of the seat belt retractor comprises in a conventional manner the vehicle sensitive sensor device as well as the belt webbing sensitive sensor device. These two sensor devices are designed in a known manner and are shown diagrammatically as a sensor device 14 in the drawing figure. The vehicle sensitive part of the sensor device 14 reacts to an excessive acceleration or braking of the vehicle and causes a blocking of the winding shaft 3. The belt webbing sensitive part of the sensor device 14 reacts to an excessive rotary acceleration of the winding shaft and also causes a blocking of the winding shaft 2.

A gear 13 comprises a drive wheel 11, which is rotatably mounted on a shaft 8 rotationally connected to the winding shaft 2, and which is rotationally connected to an outer spring end 10of the motive spring 3 by a rigid rotary connection. The shaft 8 is an axial extension of the winding shaft 2. The torque generated by the driving means 4 is transmitted to the drive wheel 11 via a further gear part, for instance a front screw wheel 12 or a worm wheel. This torque transmission is suited for an arrangement of the driving means as shown in the figure, in which an output shaft 16 of the driving means runs perpendicular to the axis of the shaft 8. In a parallel arrangement of the output shaft 16 of the driving means 4, the force-transmitting gear part can be a drive belt or a gear wheel or gear wheel pair. The gear, the coupling and the motive spring are preferably arranged on the side of the seat belt retractor on which the vehicle and belt webbing sensitive sensor is provided.

A rotary connection 15, rigid at least during the force or torque transmission, is provided for the force or torque transmission from the drive wheel 11 to the motive spring 3. This rigid rotary connection 15 can preferably be constantly provided. In this case the drive wheel 11 is rotationally connected to an outer spring end 10 of the motive spring 3. The rigid rotary connection 15 is rotatably mounted around the shaft 8. The rigid rotary connection 15 can for instance be securely connected to a spring housing 20, in which the motive spring 3 is arranged.

The coupling 5 comprises a first clutch engagement surface 18, which is movably mounted to a component rotationally connected to the drive wheel 11 against the force of a restoring spring (not shown in detail). In the shown embodiment the first clutch engagement surface 18 is arranged on a coupling part 21 movably mounted on the spring housing 20. The second clutch engagement surface 19 of the coupling 5 is rotationally connected to the shaft 8. To this effect, in the shown embodiment, a second coupling part 22 is provided, on which the second clutch engagement surface 19 is located and which is rotationally connected to the shaft 8 at a fastening point 23, for instance via a spline. In this manner a rotational connection between the second clutch engagement surface 19 of the coupling 5 and the winding shaft 2 is created. In a known manner the two clutch engagement surfaces 18 and 19 of the coupling 5 can be toothed gears, frictional surfaces or the like, engaging one another during the coupling engagement. A suitable coupling means can for instance also be a coupling as described in DE 198 44 092 C2. The coupling engagement can be caused by in particular an electromagnetic force or by inertial forces.

In the shown embodiment, the components of the coupling 5 are arranged between the drive wheel 11 and the motive spring 3, in particular the spring housing 20. In this case the components of the coupling 5 are bridged by the rigid rotary connection 15. In this manner a particularly compact structure of the unit 17 comprising the gear 13, the coupling 5 and the motive spring 3, is achieved, which is accommodated in a common housing. In addition the components of the gear 13, the coupling 5 and the motive spring 13 can be pre-assembled in sequence and in a flat arrangement with regard to the unit 17, and be mounted to the shaft 8 on the mechanical side of the seat belt retractor. It is furthermore possible to carry out the sequential assembly of the components of the unit 17 in a simple manner on the shaft 8 projecting from the mechanical side and to subsequently place them in a common housing.

The axial order of the sandwich arrangement of the drive wheel 11, the coupling 5 and the motive spring 3 can also be switched according to assembly requirements. For instance, the inner drive wheel 11 or the parts of the coupling 5 can be positioned on the outside and the motive spring 3 can be arranged between the drive wheel 11 and the coupling 5. Any other axial order of the components, however, is also possible.

Should in addition the function of a power tightening with a compact arrangement be provided on the seat belt retractor, the power tightener can preferably be designed in the shape of a pyrotechnically driven tightening device 6 on the other side of the seat belt retractor or the winding shaft 2, as can be seen in the figure. To this effect a drive wheel 24 rotationally connected to the winding shaft 2 is provided. The drive wheel 24 can also be connected to the winding shaft 2 via a coupling which can be engaged for tightening purposes. The tightening drive can be designed in a known manner, whereby a toothed rack drive, as known for instance from EP 0 629 531 B1, or drive bodies, arranged in sequence in a guide channel, as known for instance from GB 2,325,896, or ball-shaped drive bodies, as known from DE 196 02 549 A1, can act upon the drive wheel 24.

The mode of operation of the embodiment shown in the figure is as follows.

To adjust or change the spring force of the motive spring 3, the electric motor driving means 4 generates a torque at a low revolution, which is transmitted from the drive wheel 11 via the rigid rotary connection 15 to the outer spring end 10 of the motive spring 3. By twisting the outer spring end 10, according to the rotational direction of the output shaft 16 of the driving means 4, the spring force of the motive spring 3 is increased or decreased. For instance, during the return of the seat belt 1 to a stored configuration after removal of the seat belt, the restoring force of the motive spring 3 can be correspondingly increased. During the application of the seat belt 1 the restoring force of the motive spring 3 can be decreased to increase the comfort perceived by the wearer. In addition, after the application of the seat belt, an increased restoring force can be provided by the motive spring 3, to apply the seat belt to the body of the vehicle occupant in a perfect manner. Subsequently the already mentioned decreased restoring force of the motive spring 3 can be adjusted to adjust the comfort in wear during normal driving conditions.

To transmit the driving torque of the driving means 4 to the winding shaft 2, the coupling 5 is brought into its engaged configuration. The coupling 5 can be brought into an engaged configuration, for instance in a pre-crash driving situation by a an electromagnetic force. The coupling 5 can be designed so that it can be automatically brought into the engaged configuration at an increased revolution of the driving means 4 by an inertial force or a centrifugal force. To this effect the coupling device 5 can be designed according to the type taught in US 6,196,487.

The driving force generated by the driving means 4 can be reversibly transmitted to the winding shaft 2 via the shaft 8. If no crash follows the pre-crash situation, the coupling 5 can be released, for instance by a brief turning of the driving means 5 into the opposite direction, and the belt webbing application force provided for normal driving conditions is restored at the seat belt through the corresponding adjustment of the restoring force of the motive spring 3.

In the event of a crash the pyrotechnically driven tightening device 6 is activated so that the vehicle occupant is pulled back and held in the vehicle seat by a retensioning action with a high retracting force.

The electric motor driving means 4 can also be activated when the vehicle occupant has been in an out-off-position for more than a predetermined length of time. The vehicle occupant is then brought back into a normal seating position by the restoring force supplied by the driving means 4.

In a preferable manner the pyrotechnical tightening device as well as the unit 17 is secured to a common frame, in particular to the belt retractor frame 7, which is to be secured to the vehicle structure.

In combination with the electric motor driving means 4, the torque of which is transmitted to the other side of the retractor or of the winding shaft 2 to the motive spring 3 and the winding shaft, a compact arrangement of the retractor is achieved, on the one hand ensuring the comfort of the wearer of the seat belt through a change in the spring force at a low revolution of the driving means as well as ensuring on the other hand a belt pretightening during a pre-crash situation at an increased revolution through transmission of the torque of the driving means to the winding shaft. The pretightening function can be carried out in a reversible manner by the activated coupling with the aid of the electric motor driving means. The energy for instance of a repeatedly chargeable electric memory, for instance a condenser for operating the electric motor driving means, in particular of the electric motor, can be used. As mentioned above, the retractor furthermore assumes the function of power tightening in a crash that has occurred. The pyrotechnically driven tightening device on the other side of the retractor is used to this effect. This results in the advantage that conventionally assembled seat belt retractors can be provided with an electric motor driving means, in particular for pretightening the seat belt in a pre-crash situation, as well as with an adjustment means for the motive spring force.

In this manner a seat belt retractor is achieved, in which in a compact arrangement the adjustment of the motive spring force, the function of the pretightening in a pre-crash situation and the function of the power tightening in a crash are integrated in a compact arrangement.

## Claims

1. A retractor for a seat belt of a vehicle comprising a winding shaft (2) of a seat belt retractor for winding up a seat belt (1) and a retractor frame (7), a motive spring (3) to bias the winding shaft (2) in the winding direction of the seat belt, an electric motor (4), from which a torque can be transmitted to the motive spring (3) to change the spring force, and a coupling (5), via which the torque of the electric motor (4) can be transmitted to the winding shaft (2) to wind up the seat belt (1), and a gear (13) to transmit the torque of the electric motor (4) to the winding shaft (2) or the motive spring (3), whereby the motive spring (3), the coupling (5) and the gear (13) are all located on one side of the seat belt retractor frame (7), the gear (13) comprises a drive wheel (11) which is rotatably mounted on a shaft (8) rotationally and coaxially connected to a winding shaft (2), and which is rotationally connected to an outer spring end (10) of the motive spring (3) by a rigid rotary connection (15) and a first clutch engagement surface (18) of the coupling (5) is movably mounted against a restoring force on a component securely connected to the rigid rotary connection (15) and able to rotate around the shaft (8) and a second clutch engagement surface (19) of the coupling (5) is connected to and rotates with the shaft (8), **characterized by** the gear, coupling and motive spring being located on the side of the seat belt retractor frame (7) on which a vehicle and belt webbing sensitive sensor device (14) is located and being accommodated as a unit in a common housing formed by the rigid rotary connection (15) and mounted on the shaft (8).

2. A retractor according to claim 1, wherein the first clutch engagement surface (18) of the coupling (5) can be moved into an engaged configuration with the second clutch engagement surface (19) by an electromagnetic force or by an inertial force.

3. A retractor according to one of claims 1 to 3, wherein the gear (13) is a screw gear, in particular with a front screw wheel pair or worm gear.

4. A retractor according to one of claims 1 to 3, wherein on an opposite side of the seat belt retractor frame (7), a pyrotechnically driven tightening device (6) is located, which drives the winding shaft (2) in the winding direction for the power tightening of the seat belt.

5. A retractor according to one of claims 1 to 4, wherein the operation of the electric motor (4) is activated by a pre-crash sensor signal and the operation of the pyrotechnically driven tightening device (6) is activated by a crash sensor signal.

## Patentansprüche

1. Gurtaufroller für einen Sicherheitsgurt eines Fahrzeuges, der aufweist: eine Aufwickelwelle (2) eines Sicherheitsgurtaufrollers für das Aufwickeln eines Sicherheitsgurtes (1) und einen Gurtaufrollerrahmen (7); eine Treibfeder (3), um die Aufwickelwelle (2) in der Aufwickelrichtung des Sicherheitsgurtes vorzuspannen; einen Elektromotor (4), von dem ein Drehmoment auf die Treibfeder (3) übertragen werden kann, um die Federkraft zu verändern, und eine Kupplung (5), mittels der das Drehmoment des Elektromotors (4) auf die Aufwickelwelle (2) übertragen werden kann, um den Sicherheitsgurt (1) aufzuwickeln, und ein Getriebe (13), um das Drehmoment des Elektromotors (4) auf die Aufwickelwelle (2) oder die Treibfeder (3) zu übertragen, wobei die Treibfeder (3), die Kupplung (5) und das Getriebe (13) alle auf einer Seite des Rahmens (7) des Sicherheitsgurtaufrollers angeordnet sind, wobei das Getriebe (13) ein Antriebsrad (11) aufweist, das drehbar auf einer Welle (8) montiert ist, die drehbar und koaxial mit einer Aufwickelwelle (2) verbunden ist, und die drehbar mit einem äußeren Federende (10) der Treibfeder (3) mittels einer starren Drehverbindung (15) verbunden ist, und wobei eine erste Kupplungseingriffsfläche (18) der Kupplung (5) beweglich gegen eine Rückstellkraft auf einem Bauteil montiert ist, das sicher mit der starren Drehverbindung (15) verbunden und in der Lage ist, sich um die Welle (8) zu drehen, und wobei eine zweite Kupplungseingrißsfläche (19) der Kupplung (5) mit der Welle (8) verbunden ist und sich mit ihr dreht, **dadurch gekennzeichnet, dass** das Getriebe, die Kupplung und die Treibfeder auf der Seite des Rahmens (7) des Sicherheitsgurtaufrollers angeordnet sind, auf der eine fahrzeug- und gurtbandempfindliche Sensorvorrichtung (14) angeordnet ist, und dass sie als eine Einheit in einem gemeinsamen Gehäuse aufgenommen werden, das durch die starre Drehverbindung (15) gebildet wird und auf der Welle (8) montiert ist.

2. Gurtaufroller nach Anspruch 1, bei dem die erste Kupplungseingriffsfläche (18) der Kupplung (5) in eine Eingriffskonfiguration mit der zweiten Kupplungseingriffsfläche (19) mittels einer elektromagnetischen Kraft oder mittels einer Trägheitskraft bewegt werden kann.

3. Gurtaufroller nach einem der Ansprüche 1 bis 3, bei dem das Getriebe (13) ein Schneckengetriebe ist, insbesondere mit einem vorderen Schneckenradpaar oder Schneckenrad.

4. Gurtaufroller nach einem der Ansprüche 1 bis 3, bei dem auf einer entgegengesetzten Seite des Rahmens (7) des Sicherheitsgurtaufrollers eine pyrotechnisch angetriebene Straffervorrichtung (6) angeordnet ist, die die Aufwickelwelle (2) in der Aufwickelrichtung für das angetriebene Straffen des Sicherheitsgurtes antreibt.

5. Gurtaufroller nach einem der Ansprüche 1 bis 4, bei dem der Betrieb des Elektromotors (4) durch ein Vorcrashsensorsignal aktiviert wird, und bei dem der Betrieb der pyrotechnisch angetriebenen Straffervorrichtung (6) durch ein Ctashsensorsignal aktiviert wird.

## Revendications

1. Rétracteur pour une ceinture de sécurité d'un véhicule, comprenant un arbre d'enroulement (2) d'un rétracteur de ceinture de sécurité pour enrouler une ceinture de sécurité (1) et un cadre de rétracteur (7), un ressort moteur (3) pour contraindre l'arbre d'enroulement (2) dans la direction d'enroulement de la ceinture de sécurité, un moteur électrique (4) à partir duquel un couple peut être transmis au ressort moteur (3) pour changer la force du ressort et un accouplement (5) par le biais duquel le couple du moteur électrique (4) peut être transmis à l'arbre d'enroulement (2) pour enrouler la ceinture de sécurité (1) et un engrenage (13) pour transmettre le couple du moteur électrique (4) à l'arbre d'enroulement (2) ou au ressort moteur (3), le ressort moteur (3), l'accouplement (5) et l'engrenage (13) étant tous situés sur un côté du cadre de rétracteur (7) de ceinture de sécurité, l'engrenage (13) comprenant une roue d'entraînement (11) qui est montée de manière rotative sur un arbre (8) connecté rotativement et coaxialement à un arbre d'enroulement (2) et qui est connecté rotativement à une extrémité de ressort extérieure (10) du ressort moteur (3) par une connexion rotative rigide (15) et une première surface d'engagement d'embrayage (18) de l'accouplement (5) étant montée de manière à avoir un mouvement qui s'oppose à une force de rappel sur un composant connecté fixement à la connexion rotative rigide (15) et capable de tourner autour de l'arbre (8), et une seconde surface d'engagement d'embrayage (19) de l'accouplement (5) étant connectée à l'arbre (8) et tournant avec lui, **caractérisé par le fait que** l'engrenage, l'accouplement et le ressort moteur sont situés sur le côté du cadre de rétracteur (7) de ceinture de sécurité sur lequel un dispositif capteur (14) sensible au véhicule et à la sangle de ceinture est situé et sont logés en tant qu'unité dans un boîtier commun formé par la connexion rotative rigide (15) et monté sur l'arbre (8).

2. Rétracteur selon la revendication 1, dans lequel la première surface d'engagement d'embrayage (18) de l'accouplement (5) peut être déplacée dans une configuration engagée avec la seconde surface d'engagement d'embrayage (19) par une force électromagnétique ou par une force d'inertie.

3. Rétracteur selon l'une des revendications 1 à 3, dans lequel l'engrenage (3) est un engrenage hélicoïdal, notamment avec une paire de roues à dents hélicoïdales frontales ou un engrenage à vis sans fin.

4. Rétracteur selon l'une des revendications 1 à 3, dans lequel un dispositif de serrage à commande pyrotechnique (6) est situé sur un côté opposé du cadre de rétracteur (7) de ceinture de sécurité, lequel dispositif entraîne l'arbre d'enroulement (2) dans la direction d'enroulement pour la mise en tension automatique de la ceinture de sécurité.

5. Rétracteur selon l'une des revendications 1 à 4, dans lequel le fonctionnement du moteur électrique (4) est déclenché par un signal de capteur de pré-collision et le fonctionnement du dispositif de serrage à commande pyrotechnique (6) est déclenché par un signal de capteur de collision.
